# EUROPÄISCHE PATENTANMELDUNG

(11) **EP 1 334 952 A2**
(43) Veröffentlichungstag der Anmeldung: **13.08.2003**
(21) Anmeldenummer: 03001898.0
(22) Anmeldetag: 30.01.2003
(51) Int. Cl.: C02F 3/30

(54) **Verfahren und Vorrichtung zur Behandlung von ammonum-, phosphat- und kaliumhaltigen Flüssigkeiten**

(30) Priorität: 12.02.2002 DE 10205950
(71) Anmelder: A3-Abfall-Abwasser-Anlagentechnik GmbH, 45881 Gelsenkirchen (DE)
(72) Erfinder: Brüss, Ulrich, Dipl.-Biol., 48301 Nottuln (DE)
(74) Vertreter: Vomberg, Friedhelm, Dipl.-Phys.

(57) **Zusammenfassung**

Die Erfindung betrifft ein Verfahren und eine Vorrichtung zur Behandlung von ammonium-, phosphat- und kaliumhaltigen Flüssigkeiten, die zusätzlich Feststoffanteile ausweisen, insbesondere von landwirtschaftlichen Abwässern, Deponieabwässern oder Abwässern aus Abfallbehandlungsanlagen.

Erfindungsgemäß werden nach einer mechanischen Abtrennung und einer Feinstfiltration Ammonium und Phosphat als Magnesium-Ammonium-Phosphat ausgefällt, hiernach unter aeroben Bedingungen die organischen Reststoffe biologisch abgebaut sowie Ammoniak entfernt und schließlich die noch im Abwasser enthaltenen organischen Verbindungen und gelösten Salze durch Umkehrosmose abgetrennt.

## Beschreibung

Die Erfindung betrifft ein Verfahren und eine Vorrichtung zur Behandlung von ammonium-, phosphat- und kaliumhaltigen Flüssigkeiten, die zusätzlich Feststoffanteile ausweisen, insbesondere von landwirtschaftlichen Abwässern, Deponieabwässern oder Abwässern aus Abfallbehandlungsanlagen.

In landwirtschaftlichen Betrieben anfallende Abwässer weisen meist hohe Gehalte an Stickstoff, Phosphor und Kalium auf. Allein in der Bundesrepublik Deutschland werden jährlich ca. 250 Mio. Tonnen der sogenannten "Gülle" auf landwirtschaftlichen Flächen als Wirtschaftsdünger ausgebracht. In Regionen mit hoher Nutztierdichte fallen erhebliche Überschüssen an organischen Pflanzen-Nährstoffträgern an; diese müssen derzeit mit hohen Kosten für die Landwirtschaft in Regionen mit einem Nährstoffbedarf überführt werden. Durch die landwirtschaftliche Ausbringung unbehandelter Gülle ergeben sich folgende Probleme. Etwa 50 % des Stickstoffes tritt bei Aufrührung und Aufbringung der Gülle als Ammoniak in die Luft über. Durch die Abgabe des Ammoniaks in die Luft besteht die Gefahr, dass ein Teil der Stickstoffverbindungen ohne Aufnahme durch die Pflanzen in Nitrat umgewandelt wird und die Eutrophierung der Gewässer begünstigt und dadurch Umweltschäden verursacht. Ferner wird Methan als klimaschädliches Gas aus der unbehandelten Gülle durch anaerobe Vergärungsprozesse freigesetzt. Bei der Gülleausbringung entstehen erhebliche Geruchs- und Keimemissionen. Aufgrund des hohen Wasseranteils in der Gülle entstehen bei der Verwertung von Gülle zudem erhebliche Transportkosten, insbesondere bei überbetrieblicher Verwertung. Schließlich ist bekannt, dass ein Teil des in der Gülle enthaltenen Phosphates kaum düngewirksam ist.

Derzeit wird vermehrt versucht, die Gülle einer alternativen Behandlung bzw. Verwertung zu unterziehen. Hierzu wird die Gülle, meist zusammen mit anderen Substraten, unter Nutzung der anaeroben Gärung zur Produktion von Biogas eingesetzt. Das Biogas kann in Blockheizkraftwerken zur Erzeugung von thermischer und elektrischer Energie eingesetzt werden. Die in der Gülle enthaltenen Pflanzennährstoffe werden durch den Fermentationsprozeß nicht reduziert. So weist der ausgefaulte Gärrest, aufgrund des Proteinabbaus im Fermenter, eher noch höhere Ammonium- und Phosphatkonzentrationen auf als frische, unbehandelte Gülle. Aufgrund der hohen Nährstoffkonzentrationen kann der Gärrest häufig nicht auf nahegelegenen landwirtschaftlichen Flächen ausgebracht werden, sondern muß mittels Tanklastzug zu Flächen mit noch freien Nährstoffkapazitäten transportiert werden. Dies verursacht ebenfalls hohe Kosten und belastet die Umwelt.

Die Zielsetzung bei der Behandlung des Gärrestes besteht also darin, den Gärrest so aufzubereiten, dass ein aufwendiger und unwirtschaftlicher Transport unterbleiben kann und keine Umweltbelastung aus der Gärrestbehandlung resultiert.

In der DE 37 32 896 A1 wird ein Verfahren zur Eliminierung von Ammonium und Phosphat aus Abwasser oder Prozeßwasser vorgeschlagen, bei dem ein pH-Wert zwischen 7 und 10 eingestellt und durch Zugabe von Magnesiumsalz und/oder Magnesiumoxid Ammonium und Phosphat in einem gewünschten Ausfällungsgrad in der Verbindung MgNH₄PO₄ · 6H₂O(MAP) auskristallisiert und abgetrennt wird. Der Prozeß soll so gesteuert werden, dass ein an den Düngerohstoffen phosphat-, ammonium- und magnesiumreiches Produkt erhalten wird.

In der DE 40 40 067 C2 wird ein Verfahren zur Entfernung und Gewinnung der Ammoniumgehalte aus Prozeß- und Abwässern unter Fällung von Magnesiumammoniumphosphat vorgeschlagen, aus denen durch thermische Zersetzung das Fällungsmittel zurückgewonnen und in die Fällungsstufe rezykliert wird, wobei in einer Stufe die Magenesiumammoniumphosphat-Fällung bei einem konstanten pH-Wert in dem Bereich von 8,5 bis 9,5 und bei einer Magnesium/Phosphor-Molverhältnis von 1 : 1 bis 1,5 : 1 unter gleichzeitiger Verwendung von Magnesiumhydrogenphosphat in Form einer wässrigen Lösung und Natronlauge als Fällungsmittel durchgeführt wird und in einer anderen Stufe zur Regenerierung des Fällungsmittels der in der ersten Stufe gebildeten Magnesiumammoniumphosphat-Niederschlag als 2 bis 20 %ige Suspension nach der Zugabe von Natronlauge bei einer Temperatur oberhalb 50°C mit Heißluft oder Wasserdampf unter Ammoniak-Entfernung gestrippt und der dabei erhaltene feststoffhaltige Rückstand direkt in die Fällungsstufe zurückgeführt wird.

Nachteilig bei den beschriebenen Verfahren nach der DE 37 32 896 A1 und der DE 40 40 067 C2 ist, dass bei der Fällung von Magnesiumammoniumphosphat aus organischen und mikrobiell belasteten partikelreichen Abwasserströmen, wie sie bei der Gülle bzw. bei Gärresten aus Biogasanlagen anzutreffen sind, die organischen Partikel mitgefällt werden. Dies führt dazu, dass die wirtschaftliche und technische Verwertung des Fällproduktes nur sehr eingeschränkt möglich ist. Die Belastung mit organischen Partikeln führt dazu, dass das Fällprodukt aus hygienischen Gründen nicht mehr lagerfähig ist, eine sehr starke Geruchsbildung entfaltet, eine hohe mikrobiologische Atmungsaktivität aufweist und somit als Handelsgut nicht mehr vermarktet werden kann.

Die DE 198 29 799 C2 beschreibt ein Verfahren zur stofflichen Verwertung von ammoniumhaltigen Abwasser, insbesondere von Gülle, welches weitere lösliche Bestandteile und ggf. Feststoffe enthält, mit folgenden Arbeitsschritten:
a) Abtrennung der Feststoffe durch Ultrafiltration, wobei die Porengröße der eingesetzten Membran 5 bis 500 nm beträgt;
b) Umkehrosmose zur Aufkonzentrierung des im wesentlichen feststofffreien, ammoniumhaltigen Abwassers zu einem wässrigen Konzentrat, welches einen erhöhten Gehalt an Ammonium und weiteren löslichen Bestandteilen aufweist, unter gleichzeitiger Gewinnung von im wesentlichen ammoniumfreien Reinwasser;
c) Fällung von Ammonium als Magnesiumammoniumphosphat in dem bei der Umkehrosmose erhaltenen ammoniumhaltigen, wässrigen Konzentrat;
d) Abtrennung von gefälltem Magnesiumammoniumphosphat unter Gewinnung von im wesentlichen ammoniumfreien Restkonzentrat, welches zumindest teilweise die weiteren löslichen Bestandteile enthält.

Nachteilig bei diesem Verfahren ist, dass die Fällung des Ammoniums aus dem Konzentrat der Umkehrosmosestufe erfolgt. Die zur Aufkonzentration des Ultrafiltrationspermeates eingesetzten Umkehrosmosemembranen weisen eine Teildurchlässigkeit für Ammonium auf, womit eine erhöhte Ammoniumrestbelastung im Permeat der Umkehrosmosestufe eintritt. Je höher die Konzentration des Ammoniums auf der Konzentratseite der Umkehrosmosemembran ist, desto schwieriger wird es, das Ammonium an einer Membranpassage zu hindern. Entsprechend dem Anwendungsbeispiel können auf der Permeatseite der Umkehrosmoseanlage Ammoniumkonzentrationen bis zu 520 mg/l auftreten. Diese hohe Restbelastung führt dazu, dass das Permeat aufgrund seines umweltgefährdenden Potentials nicht in Gewässer eingeleitet werden darf. Es entstehen zusätzlich hohe Entsorgungskosten, die das Verfahren unwirtschaftlich machen. Abwässer, wie Gärreste aus Biogasanlagen, Abfallbehandlungsanlage sowie Deponiesickerwasser weisen aufgrund ihres Ursprungs bereits hohe Ammoniumkonzentrationen im Bereich zwischen 1000 mg/l und 6000 mg/l auf. Eine weitere Aufkonzentration der Ammoniumkonzentration ist zur wirtschaftlichen Durchführung der Fällungsreaktion daher nicht erforderlich. Des weiteren ist nachteilig, dass das beschriebene Verfahren eine geringe technische Flexibilität aufweist, da auf unterschiedliche Düngemittel Bedarfssituationen nicht reagiert werden kann. So ist dieses Verfahren nur in der Lage, Ammonium in der Form des Magnesiumammoniumphosphats auszufällen. Alternative Entsorgungswege bestehen nicht. Aufgrund des beschränkten Wirkungsgrades der Ammoniumfällungsreaktion aus dem Konzentrat der Umkehrosmosestufe verbleibt eine Restbelastung mit Ammonium bestehen, die zu einer erschwerten Entsorgung des Umkehrosmosekonzentrats führt. Das Konzentrat enthält neben dem Ammonium auch alle Stoffe, die in das Filtrat der vorgeschalteten Ultrafiltrationsanlage übergetreten sind. Diese Stoffe sind u.a. niedermolekulare organische Verbindungen, die zusammen mit dem Ammonium aus dem Konzentrat der Umkehrosmoseanlage ausgefällt werden und ebenfalls zu einer erhöhten organischen Belastung des Fällungsproduktes führen. Dies erschwert jedoch die Vermarktung des Fällproduktes. Insgesamt ist das vorbeschriebene Verfahren somit beispielsweise nicht geeignet, Gärreste aus einer Biogasanlage wirtschaftlich aufzubereiten und hieraus erhältliche Produkte zu vermarkten.

Es ist Aufgabe der vorliegenden Erfindung, ein Verfahren der eingangs genannten Art anzugeben, mit dem eine umweltgerechte und wirtschaftliche Aufbereitung und stoffliche Verwertung von phosphat-, ammonium- und kaliumhaltigen Abwässern möglich ist, welches die Abtrennung von Phosphat und Ammonium als Produkt einer Fällungsreaktion ermöglicht sowie ein Ablaufwasser erzeugt, welches in Gewässer eingeleitet werden kann.

Diese Aufgabe wird durch das Verfahren nach Anspruch 1 gelöst, das durch folgende Teilschritte charakterisiert ist:
a) Mechanische Abtrennung der im Abwasser enthaltenen Feststoffe und Grobpartikel mit einem Durchmesser ≥ 150 µm, vorzugsweise ≥ 10 µm
b) Feinstfiltration des Abwassers zur Abscheidung von Partikeln ≥ 0,8 µm, vorzugsweise ≥ 0,01 µm
c) Fällung von Ammonium und Phosphat als Magnesiumammoniumphosphat einschließlich der Mitfällung von Kalium
d) Biologischer Abbau der organischen Reststoffe sowie biologische Ammoniakentfernung und Phosphatbindung unter aeroben Bedingungen
e) Trennung der noch im Abwasser enthaltenen organischen Verbindungen und gelöster Salze durch Umkehrosmose.

Mit diesem Verfahren können phosphat-, ammonium- und kaliumhaltige Abwässer wie Gülle, Gärreste aus Biogasanlagen, Deponiesickerwasser, Abwasser aus Abfallbehandlungsanlangen sowie Kokereiabwasser aufbereitet werden.

Die Abwässer werden erfindungsgemäß einer Fest-Flüssig-Separation unterzogen, die auch mehrstufig ausgeführt sein kann. Für die Aufbereitung von Gärresten aus Biogasanlagen besteht sie zunächst aus einer mechanischen Abtrenneinrichtung mit einer Poren- oder Spaltweite von 0,5 mm bis 3 mm, welche die enthaltenen Feststoffe bis zu einem Trockensubstanzgehalt von etwa 35 % aufkonzentriert und von der flüssigen Phase abtrennt. Die flüssige Phase wird dann einer Abwassersiebung unterzogen, welche noch enthaltene faserige Bestandteile sowie Haare und feinere Partikel entfernt. Die Trenngrenze der Abwassersiebung liegt im Bereich zwischen 10 µm bis 150 µm. Das Abwasser wird anschließend einer Feinstfiltration unterzogen um feinste Partikel, die ≥ 0,8 µm sind, ggf. auch kleinere Partikel bis zu einer unteren Trenngrenze von 0,01 µm zu entfernen. Hierzu kann eine Mikro- oder Ultrafiltrationseinrichtung verwendet werden, die vorzugsweise im Cross-Flow-Modus mit Überströmungsgeschwindigkeiten des Filtrationsmoduls zwischen 1 bis 4 m/s betrieben wird. Nach Passage der Feinstfiltration enthält das sogenannte Filtrat nur noch kolloidale sowie chemisch gelöste Stoffe. Das in der Filtrationseinrichtung abgetrennte Konzentrat enthält die angereicherten Feststoffe. Der Trockensubstanzgehalt des Konzentrats liegt im Bereich zwischen 5 % und 20 %. Das Filtrat ist aufgrund der geringen Porenweite der Filtrationsmembran frei von Partikeln und Keimen jeder Art.

In einem nachfolgenden Arbeitsschritt wird das Filtrat der Feinstfiltration einer Fällungsreaktion unterzogen, wobei das Filtrat mit Magnesiumoxid sowie je nach Bedarf mit Phosphorsäure versetzt wird. Zur Beschleunigung der Fällungsreaktion und zur Reduzierung der Fällmittelkosten soll das Magnesiumoxid in chemisch gelöster Form zugesetzt werden. Die Zugabe von Phosphorsäure erfolgt in Abhängigkeit von der gewünschten Ammoniumablaufkonzentration zur quantitativen Fällung des Ammoniums wird vorzugsweise ein molares Verhältnis zwischen Magnesium, Ammonium und Phosphat von 1 bis 2 : 1 : 0,5 bis 1 eingestellt. Durch Zugabe von Natronlauge wird der verfahrensoptimierte pH-Wert zwischen 7 bis 11, vorzugsweise zwischen 8 bis 10 eingestellt. Bei der geschilderten Fällungsreaktion werden auch Kaliumionen aus dem Wasser mitgefällt, wobei die Effektivität der Kaliumfällung im Bereich zwischen 30 % und 70 % bezogen auf die Zulaufkonzentration liegt. Die ausgefällten Stoffe werden über eine Sedimentationseinrichtung vom überstehenden Ablaufwasser abgetrennt. Das Sediment wird abgezogen und durch eine Entwässerungsvorrichtung weiter aufkonzentriert. Der hieraus erhaltene Feststoff ist keimfrei und weist eine niedrige organische Belastung auf. Er hat eine graue bis beige Farbe, ist nahezu geruchsfrei und kann als pflanzenverfügbares Düngemittel eingesetzt werden. Alternativ hierzu ist es auch möglich, das Fällprodukt über ein thermisches Recyclingverfahren in Magnesiumphosphat und Ammoniak zu zerlegen, wonach Ammoniak in Form von Ammoniakwasser vermarktet werden kann und Magnesiumphosphat erneut zur Fällung von Ammonium einsetzbar ist.

Das überstehende Ablaufwasser wird nach Abzug einer biologischen Abwasserreinigung unter aeroben Bedingungen unterzogen. Die verwendete Belebungsanlage ist so zu bemessen, dass neben einem Abbau von organischen Belastungen auch im Wasser enthaltene Restgehalte an Ammonium zunächst zu Nitrat oxidiert und nachfolgend durch Denitrifikation zu molekularem Stickstoff reduziert werden können. Zur Verbesserung des biologischen Abbaus ist die Einrichtung als Membranbelebungsanlage mit getauchten Mikrofiltrationsmembranen ausgeführt. Das Ablaufwasser wird vorzugsweise mittels Niederdruck durch die Membranen abgesaugt. Die Ausführungsform einer Membranbelebungsanlage benötigt nur ¼ des gegenüber konventionellen Belebungsanlagen erforderlichen Reaktorvolumens. Das Ablaufwasser der Membranbelebungsanlage weist nur noch geringe Konzentration an biologisch schwer abbaubaren organischen Verbindungen auf. Ferner sind im Ablaufwasser Salze gelöst.

Das Ablaufwasser ist partikelfrei, so dass der abschließende Umkehrosmoseprozeß nicht gestört wird. Durch die Belüftung des Abwassers in der Membranbelebungsanlage ist das Redoxpotention innerhalb des Abwassers angehoben worden, was sich positiv auf die Standzeit der Umkehrosmosemodule auswirkt. Des weiteren werden durch die Belüftung reduzierte Schwefelverbindungen bis zum Sulfat aufoxidiert, wodurch ebenfalls Membranschädigungen verhindert werden.

Die Umkehrosmose dient dazu, die genannten organischen Verbindungen sowie einen Großteil der gelösten Salze als Konzentrat zurückzuhalten. Das Permeat der Umkehrosmoseanlage kann aufgrund seiner geringen Restbelastungen in geeignete Vorfluter ortsnah eingeleitet werden. Das Konzentrat der Umkehrosmosestufe wird vorzugsweise weiter eingetrocknet und separat entsorgt.

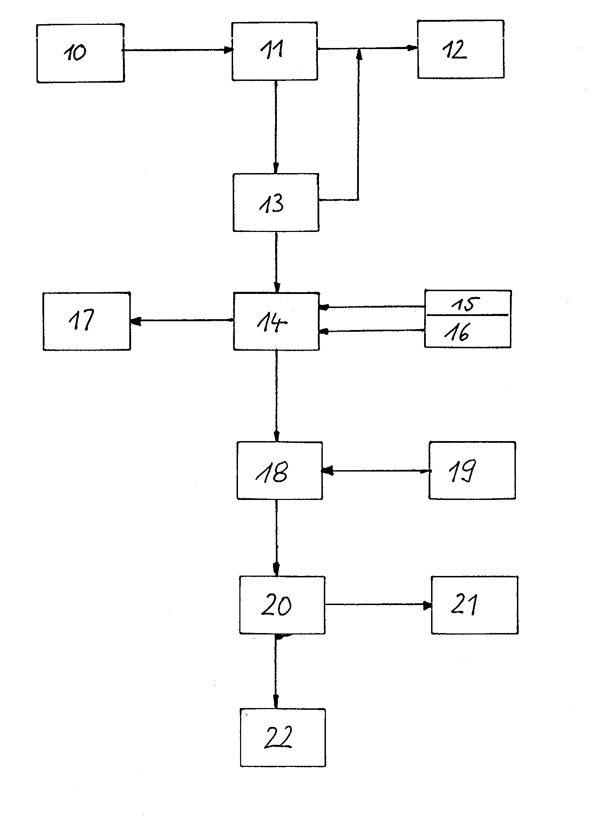

Weitere Einzelheiten des erfindungsgemäßen Verfahrens sind der Abbildung zu entnehmen, die in Form eines Fließdiagramms die einzelnen Verfahrensschritte darstellt.

Die jeweils zu behandelnde Flüssigkeit 10, sei es, dass es sich um Gülle, Gärreste, sonstige Abwässer und/oder Abfall- oder Deponiesickerwasser handelt, wird zunächst einer ersten fest-flüssig Separation 11 zugeführt, die vorzugsweise mehrstufig aufgebaut ist. Die abgeschiedenen Feststoffe 12 werden separat entsorgt, während die verbleibende Flüssigkeit einer Ultra- oder Mikrofiltration 13 zugeführt wird, in der zusätzlich Feinstpartikel (als weitere Feststoffe 12) abgetrennt werden. Die verbleibende Flüssigkeit gelangt in eine Fällungsstufe 14, zu der aus einem entsprechenden Dosierbehälter 15 Magnesiumoxid und Natronlauge 15 sowie Phosphorsäure 16 zugeführt werden. Das Ausfällprodukt, nämlich Magnesium-Ammonium-Phosphat ist mit 17 bezeichnet. Die flüssige Phase wird einer Membranbelebungsanlage 18 zugeleitet, die aerob (siehe Sauerstoffvorrat 19) betrieben wird. Von hier aus gelangt die Flüssigkeit in die Umkehrosmose 20, aus der ein Konzentrat 21 sowie eine Flüssigkeit, die einem Vorfluter 22 zugeleitet werden kann, entnommen wird.

Für das erfindungsgemäße Verfahren ist es von erheblicher Bedeutung, die Reihenfolge der Verfahrensschritte, die jeder für sich selbst nach dem Stand der Technik bekannt sind, einzuhalten, um das gewünschte Ergebnis zu erhalten.

## Patentansprüche

1. Verfahren zur Behandlung von ammonium-, phosphat- und kaliumhaltigen Flüssigkeiten, die zusätzlich Feststoffanteile aufweisen, insbesondere von landwirtschaftlichen Abwässern, Deponieabwässern oder Abwässern aus Abfallbehandlungsanlagen,
**gekennzeichnet durch**
folgende Arbeitsschritte:
a) mechanische Abtrennung der im Abwasser enthaltenen Feststoffe und Grobpartikel mit einem Durchmesser > 150 µm, vorzugsweise > 10µm;
b) Feinstfiltration des Abwassers zur Abscheidung von Partikeln ≥ 0,8 µm, vorzugsweise ≥ 0,01 µm;
c) Fällung von Ammonium und Phosphat als Magnesium-Ammonium-Phosphat einschließlich der Mitfällung von Kalium;
d) Biologischer Abbau der organischen Reststoffe sowie biologische Ammoniakentfernung und Phosphatbindung unter aeroben Bedingungen;
e) Abtrennung der noch im Abwasser enthaltenen organischen Verbindungen und gelösten Salze.

2. Verfahren nach Anspruch 1, **dadurch gekennzeichnet, dass** die mechanische Abtrennung (Arbeitsschritt a) mehrstufig durchgeführt wird.

3. Verfahren nach Anspruch 1 oder 2, **dadurch gekennzeichnet, dass** zur Feinstfiltration eine Ultrafiltration oder Mikrofiltration eingesetzt wird.

4. Verfahren nach Anspruch 3, **dadurch gekennzeichnet, dass** die Feinstfiltration im Cross-Flow-Modus mit Überströmgeschwindigkeiten von 1 bis 4 m/s durchgeführt wird.

5. Verfahren nach einem der Ansprüche 1 bis 4, **dadurch gekennzeichnet, dass** zur Magnesium-Ammonium-Phosphat-Fällung Magnesiumoxid, Natronlauge und ggf. Phosphorsäure verwendet werden.

6. Verfahren nach Anspruch 5, **dadurch gekennzeichnet, dass** zur Fällung ein molares Verhältnis zwischen Magnesium, Ammonium und Phosphat von (1 bis 2): 1 : (0,5 bis 1) und/oder durch dosierte Natronlauge-Zugabe ein pH-Wert von 7 bis 11, vorzugsweise von 8 bis 10 eingestellt wird.

7. Verfahren nach einem der Ansprüche 1 bis 6, **dadurch gekennzeichnet, dass** der biologische Abbau in einer Membranbelebungsanlage durchgeführt wird.

8. Vorrichtung zur Durchführung des Verfahrens nach einem der Ansprüche 1 bis 7, **dadurch gekennzeichnet, dass** mindestens einer fest-flüssig Trennvorrichtung ein Ansetzbehälter mit nachgeschaltetem Sedementer, eine Membranbelebungsanlage und eine Umkehrosmoseeinrichtung nachgeordnet sind.
